# FASCICULE DE BREVET EUROPEEN

(11) **EP 1 548 331 B1**
(45) Date de publication et mention de la délivrance du brevet: **28.11.2007**
(21) Numéro de dépôt: 04300896.0
(22) Date de dépôt: 15.12.2004
(51) Int. Cl.: F16H 57/02

(54) **Reniflard de boîte de vitesses**
Entlüftungsvorrichtung für Getriebe
Breather structure for gearbox

(30) Priorité: 23.12.2003 FR 0315302
(43) Date de publication de la demande: 29.06.2005
(73) Titulaire: Renault, 92109 Boulogne Billancourt (FR)
(72) Inventeur: MOUSSI, Kamel, 95220, HERBLAY (FR)

(56) Documents cités:
- DE-A- 3 810 344
- FR-A- 2 438 774
- US-A- 3 686 973

## Description

La présente invention concerne un reniflard de boîte de vitesses à commande manuelle ou automatique.

On sait que lors du fonctionnement d'une boîte de vitesses, l'huile contenue dans celle-ci s'échauffe et les vapeurs formées s'échappent à l'extérieur par un reniflard.

Dans de nombreux cas, le reniflard est constitué par un simple tuyau de mise à l'air libre qui débouche à l'extérieur en un endroit qui est en principe protégé à l'égard de la pénétration d'impuretés.

Cependant, de tels reniflards n'assurent pas une protection totale contre les risques de pénétration d'impuretés ou d'eau qui peuvent occasionner une usure de la boîte de vitesses.

D'autres solutions plus efficaces sont décrites dans le brevet FR-2 438 774 et les brevets US-3 686 973 et 5 193 645. Une autre solution de reniflard comportant les caractéristiques du préambule de la revendication 1 est décrite dans DE 3810344 A.

Ces solutions font cependant appel à des moyens compliqués tels que soupapes et matières filtrantes qui augmentent le coût de production des reniflards.

Le but de la présente invention est de remédier aux inconvénients des solutions connues ci-dessus.

Suivant l'invention, le reniflard de boîte de vitesses comportant un tuyau destiné à être raccordé à une ouverture prévue sur le dessus de la boîte de vitesses, tel que décrit dans la revendication 1.

En position de fonctionnement, le tuyau laisse facilement s'échapper à l'extérieur les vapeurs d'huile chaude.

A froid, ce tuyau empêche toute pénétration d'impuretés et d'eau.

Ainsi, ce tuyau est à la fois très efficace tout en étant de réalisation très simple et donc peu coûteuse.

Dans un mode de réalisation préféré de l'invention, dans la position dans laquelle les deux parois sont rapprochées l'une de l'autre, elles définissent entre elles, un passage perméable à l'air, mais imperméable au passage d'impuretés et d'eau.

De préférence, ledit passage est constitué par une ou plusieurs gorges formées sur la face interne de chacune des deux parois en contact et chaque gorge forme avec la gorge adjacente de l'autre paroi une ouverture de diamètre compris entre 0,01 et 0,2 mm environ.

D'autres particularités et avantages de l'invention apparaîtront encore tout au long de la description ci-après,

Aux dessins annexés, donnés à titre d'exemples, non limitatifs :
- la figure 1 est une vue en coupe schématique d'une boîte de vitesses équipée d'un reniflard selon l'invention,
- la figure 2 est une vue en élévation du tuyau formant le reniflard,
- la figure 3 est une vue en coupe partielle montrant l'extrémité aplatie du tuyau, après rotation de celui-ci de 90° par rapport à sa position sur la figure 2,
- la figure 4 est une vue en coupe suivant le plan A - A de la figure 3, montrant l'extrémité du tuyau en position active de fonctionnement,
- la figure 5 est une vue analogue à la figure 4, l'extrémité du tuyau étant en position de repos.

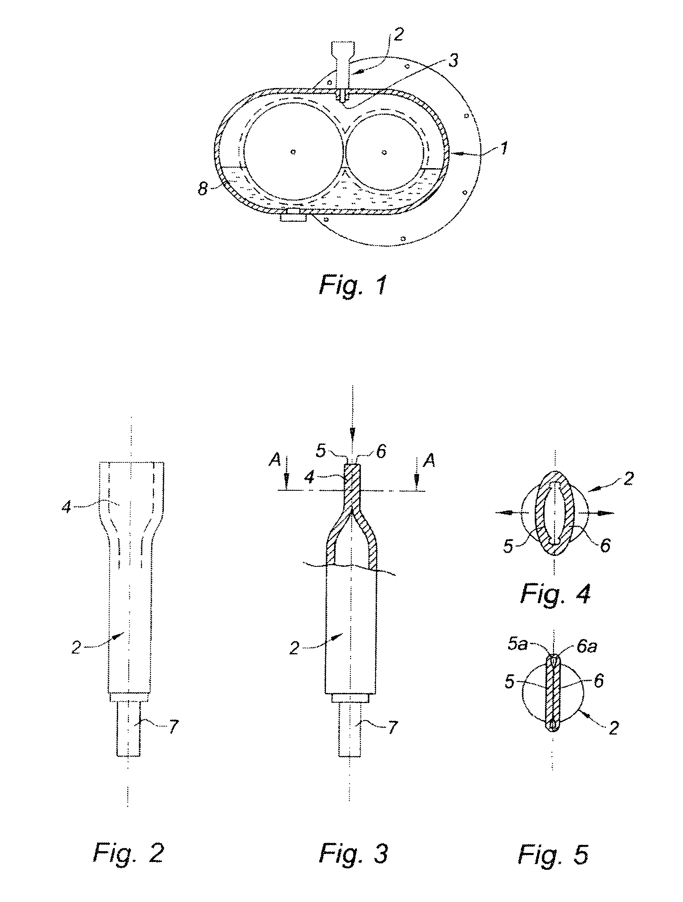

La figure 1 montre une boîte de vitesses 1 comportant un reniflard constitué par un tuyau 2 raccordé à une ouverture 3 prévue sur le dessus de la boîte de vitesses, qui communique avec l'intérieur de celle-ci.

Conformément à l'invention, le tuyau 2 est en matière déformable et élastique et comporte à son extrémité opposée à celle raccordée à l'ouverture 3, une zone aplatie 4 (voir figures 2 à 5) se terminant par deux parois 5, 6 en contact pouvant s'écarter élastiquement l'une de l'autre comme montré sur la figure 4, sous l'effet de la pression des gaz engendrés dans la boîte de vitesses 1 lors de son fonctionnement et se rapprocher l'une de l'autre (voir figure 5) après l'arrêt du fonctionnement de la boîte de vitesses, et diminution de la pression des gaz.

Dans la position dans laquelle les deux parois 5, 6 sont rapprochées l'une de l'autre, elles définissent entre elles, un passage perméable à l'air, mais imperméable au passage d'impuretés ou d'eau.

Ce passage est constitué (voir figure 5) par une ou plusieurs gorges 5a, 6a formées sur la face interne de chacune des deux parois 5, 6 en contact. Chaque gorge 5a, 6a forme avec la gorge adjacente de l'autre paroi une ouverture circulaire de faible diamètre par exemple compris entre 0,01 et 0,2 mm. Ces petites ouvertures sont suffisantes pour permettre à la boîte de vitesses de « respirer » tout en évitant la pénétration d'impuretés ou d'eau.

Le tuyau 2 est de préférence en élastomère préformé pour former la zone aplatie 4. Cet élastomère doit bien entendu résister en continu aux vapeurs d'huile et à une température supérieure à 100°C.

De préférence, la zone aplatie 4 s'étend sur une distance comprise entre 1/10^{ème} et 1/3 de la longueur du tuyau 2 pour obtenir un bon contact entre les parois 5 et 6.

Par ailleurs, dans l'exemple représenté (figures 2 et 3) le tuyau 2 comporte à son extrémité opposée à la zone aplatie 4, un embout 7 de section plus faible que celle du tuyau, destiné à être emboîté dans l'ouverture 3 de la boîte de vitesses 1.

Le reniflard que l'on vient de décrire fonctionne de la façon suivante :
Lors du fonctionnement de la boîte de vitesses, l'huile 8 contenue dans celle-ci s'échauffe à une température qui peut atteindre 100°C. La pression des vapeurs d'huile s'élève et parvient à écarter, du fait de leur élasticité, les deux parois 5 et 6 de la zone aplatie, comme montré sur la figure 4, ce qui permet à ces vapeurs de s'échapper à l'extérieur.
Après l'arrêt du fonctionnement, l'huile 8 se refroidit, la pression des vapeurs diminue et les parois 5 et 6 de la zone aplatie du tuyau 2 se rapprochent pour reprendre leur position de repos, comme indiqué sur la figure 5.

Dans cette position subsistent deux petites ouvertures formées par les gorges 5a, 6a qui permettent à l'air de pénétrer à l'intérieur de la boîte de vitesses 1 afin que celle-ci puisse « respirer ».

Cependant, ces petites ouvertures empêchent la pénétration des impuretés telles que des grains de sable ou de l'eau qui sont susceptibles d'endommager les mécanismes situés dans la boîte de vitesses.

Le principal avantage du reniflard selon l'invention réside dans la simplicité de sa construction et par conséquent de son faible coût.

## Revendications

1. Reniflard de boîte de vitesses (1) comportant un tuyau (2) en matiére déformable et élastique destiné à être raccordé à une ouverture (3) prévue sur le dessus de la boîte de vitesses, qui communique avec l'intérieur de celle-ci, et **caractérisé en ce que** ledit tuyau (2) comporte à son extrémité opposée à celle destinée à être raccordée à ladite ouverture (3), une zone aplatie (4) se terminant par deux parois (5, 6) en contact pouvant s'écarter élastiquement l'une de l'autre sous l'effet de la pression des gaz engendrés dans la boîte de vitesses (1) lors de son fonctionnement et se rapprocher l'une de l'autre après l'arrêt du fonctionnement de la boîte de vitesses, et diminution de la pression des gaz.

2. Reniflard de boîte de vitesses selon la revendication 1, **caractérisé en ce que** dans la position dans laquelle les deux parois (5, 6) sont rapprochées l'une de l'autre, elles définissent entre elles, un passage perméable à l'air, mais imperméable au passage d'impuretés et d'eau.

3. Reniflard de boîte de vitesses selon la revendication 2, **caractérisé en ce que** ledit passage est constitué par une ou plusieurs gorges (5a, 6a) formées sur la face interne de chacune des deux parois (5, 6) en contact.

4. Reniflard de boîte de vitesses selon la revendication 3, **caractérisé en ce que** chaque gorge (5a, 6a) forme avec la gorge adjacente de l'autre paroi une ouverture de diamètre compris entre 0,01 et 0,2 mm environ.

5. Reniflard selon l'une des revendications 1 à 4, **caractérisé en ce que** ledit tuyau (2) est en élastomère préformé.

6. Reniflard selon la revendication 5, **caractérisé en ce que** ledit élastomère résiste en continu aux vapeurs d'huile et à une température supérieure à 100°C.

7. Reniflard selon l'une des revendications 1 à 6, **caractérisé en ce que** ladite zone aplatie (4) s'étend sur une distance comprise entre 1/10^{ème} et 1/3 de la longueur du tuyau (2).

8. Reniflard selon l'une des revendications 1 à 7, **caractérisé en ce que** le tuyau (2) comporte à son extrémité opposée à ladite zone aplatie (4), un embout (7) de section plus faible que celle du tuyau (2) destiné à être emboîté dans ladite ouverture (2) de la boîte de vitesses (1).

9. Boîte de vitesses équipée d'un reniflard selon l'une des revendications 1 à 8.

## Claims

1. Gearbox breather for a gearbox (1) comprising a pipe (2) made of deformable and elastic material intended to be connected to an opening (3) made in the top of the gearbox, which communicates with the inside of this gearbox, and **characterized in that** the said pipe (2) comprises, at its opposite end to the one intended to be connected to the said opening (3), a flattened region (4) ending in two walls (5, 6) in contact that can part from one another elastically under the effect of the pressure of the gases generated in the gearbox (1) as it operates and move back closer together when the gearbox is no longer operating and the gas pressure reduces.

2. Gearbox breather according to Claim 1, **characterized in that**, in the position in which the two walls (5, 6) are close together, they define between them a passage that is permeable to air but impermeable to the passage of dirt and water.

3. Gearbox breather according to Claim 2, **characterized in that** the said passage consists of one or more grooves (5a, 6a) formed on the internal face of each of the two contacting walls (5, 6).

4. Gearbox breather according to Claim 3, **characterized in that** each groove (5a, 6a) forms, with the adjacent groove belonging to the other wall, an opening of a diameter ranging between 0.01 and 0.2 mm approximately.

5. Breather according to one of Claims 1 to 4, **characterized in that** the said pipe (2) is made of preformed elastomer.

6. Breather according to Claim 5, **characterized in that** the said elastomer is continuously able to withstand oil vapours and temperatures in excess of 100°C.

7. Breather according to one of Claims 1 to 6, **characterized in that** the said flattened region (4) extends over a distance ranging between 1/10^{th} and 1/3 of the length of the pipe (2).

8. Breather according to one of Claims 1 to 7, **characterized in that** the pipe (2) comprises, at its opposite end to the said flattened region (4), an end piece (7) of a cross section smaller than that of the pipe (2) and intended to be pushed into the said opening (3) in the gearbox (1).

9. Gearbox equipped with a breather according to one of Claims 1 to 8.

## Patentansprüche

1. Schaltgetriebe-Entlüfter (1) mit einem Rohr (2) aus verformbarem und elastischem Stoff, das dazu bestimmt ist, mit einer an der Oberseite des Schaltgetriebes vorgesehenen Öffnung (3) verbunden zu werden, die mit dessen Innerem in Verbindung steht, und **dadurch gekennzeichnet, dass** das Rohr (2) an seinem Ende, das demjenigen entgegengesetzt ist, das dazu bestimmt ist, mit der Öffnung (3) verbunden zu werden, eine abgeflachte Zone (4) aufweist, die in zwei in Kontakt stehenden Wänden (5, 6) endet, die sich unter der Wirkung des Drucks der Gase, die im Schaltgetriebe (1) bei seinem Betrieb erzeugt werden, elastisch voneinander entfernen und nach dem Ende des Betriebs des Schaltgetriebes und Verringerung des Drucks der Gase einander wieder annähern können.

2. Schaltgetriebe-Entlüfter nach Anspruch 1, **dadurch gekennzeichnet, dass** die zwei Wände (5, 6) in der Stellung, in der einander angenähert sind, zwischen sich einen für Luft durchlässigen, aber für Verunreinigungen und Wasser undurchlässigen Durchgang definieren.

3. Schaltgetriebe-Entlüfter nach Anspruch 2, **dadurch gekennzeichnet, dass** der Durchgang aus einer oder mehreren Kehlen (5a, 6a) besteht, die auf der Innenseite jeder der zwei in Kontakt stehenden Wände (5, 6) geformt sind.

4. Schaltgetriebe-Entlüfter nach Anspruch 3, **dadurch gekennzeichnet, dass** jede Kehle (5a, 6a) mit der benachbarten Kehle der anderen Wand eine Öffnung mit einem Durchmesser von zwischen etwa 0,01 und 0,2 mm bildet.

5. Entlüfter nach einem der Ansprüche 1 bis 4, **dadurch gekennzeichnet, dass** das Rohr (2) aus vorgeformtem Elastomermaterial ist.

6. Entlüfter nach Anspruch 5, **dadurch gekennzeichnet, dass** das Elastomermaterial durchgehend gegenüber den Öldämpfen und einer Temperatur von mehr als 100°C fest ist.

7. Entlüfter nach einem der Ansprüche 1 bis 6, **dadurch gekennzeichnet, dass** die abgeflachte Zone (4) sich über eine Entfernung erstreckt, die zwischen 1/10 und 1/3 der Länge des Rohrs (2) liegt.

8. Entlüfter nach einem der Ansprüche 1 bis 7, **dadurch gekennzeichnet, dass** das Rohr (2) an seinem der abgeflachten Zone (4) entgegengesetzten Ende ein Ansatzstück (7) mit einem geringeren Querschnitt als derjenige des Rohrs (2) aufweist, das dazu bestimmt ist, in die Öffnung (3) des Schaltgetriebes (1) eingefügt zu werden.

9. Schaltgetriebe, das mit einem Entlüfter nach einem der Ansprüche 1 bis 8 ausgestattet ist.
